# EUROPÄISCHE PATENTSCHRIFT

(11) **EP 2 639 906 B1**
(45) Veröffentlichungstag und Bekanntmachung des Hinweises auf die Patenterteilung: **21.02.2018**
(21) Anmeldenummer: 13158517.6
(22) Anmeldetag: 11.03.2013
(51) Int. Cl.: H02G 3/06

(54) **Verbindungsanordnung für Kabelkanalsysteme**
Connection assembly for cable conduit systems
Agencement de liaison pour systèmes de caniveaux de câbles

(30) Priorität: 12.03.2012 DE 202012100874 U
(43) Veröffentlichungstag der Anmeldung: 18.09.2013
(73) Patentinhaber: REHAU AG + Co, 95111 Rehau (DE)
(72) Erfinder: Seidel, Bernd, 08209 Auerbach (DE); Künzel, Werner, 95111 Rehau (DE); Christ, Michael, 95028 Hof (DE); Friedrich, Jochen, 95119 Naila (DE); Salzhuber, Frank, 90419 Nürnberg (DE); Engelbrecht, Bernd Jürgen, 90763 Fürth (DE)

(56) Entgegenhaltungen:
- EP-A1- 1 530 273
- EP-A1- 1 617 535
- EP-A2- 1 995 734
- DE-U1-202005 004 012
- DE-U1-202005 012 520
- GB-A- 2 439 811

## Beschreibung

Die Erfindung betrifft eine Verbindungsanordnung für Kabelkanalsysteme, die in einem Eckbereich angeordnet sind, umfassend wenigstens ein erstes Verbindungselement sowie wenigstens ein zweites Verbindungselement, wobei die Verbindungselemente wenigstens ein, mit dem Kabelkanalelement in Wirkverbindung bringbares Rastelement aufweisen, wobei die Verbindungselemente zueinander verdrehbar angeordnet sind und wobei das erste Verbindungselement das zweite Verbindungselement zumindest teilweise überdeckend umschließt.

Derartige Kabelkanalsysteme sind im allgemeinen Stand der Technik bekannt und haben sich in verschiedenen Branchen seit vielen Jahren bewährt. Die Verbindungsanordnungen sowie die Kabelkanalsysteme sind je nach Einsatzbedingungen als Kunststoffteile, hergestellt im Extrusions- bzw. Koextrusionsverfahren, als Aluminiumstrangpressteile oder auch als gekantete bzw. rolllierte Metallblechprofile lieferbar.

Dabei werden die Kabelkanalsysteme in fest definierten Längen geliefert, so dass bei der Verlegung bzw. der Montage von längeren bzw. unterschiedlichen Kabelkanalsystemen mehrere einzelne Kabelkanalelemente zusammengesetzt und beispielsweise auch im Eckbereich von etwa rechtwinklig aneinander stoßenden Wänden so verlegt werden müssen, dass die in den Kabelkanalelementen befindlichen Leitungselemente über den Eckbereich verlegbar sind und dass dieser Eckbereich optisch ansprechend und sicher gegen unbefugtes Eindringen verschließbar sein soll. Das Kabelkanalelement sollte nicht über den Eckbereich herausstehen, da der Überstand den Querschnitt des anderen Kabelkanalelementes einschränken würde.

Für die Verbindung von Kabelkanalsystemen, die in einem Eckbereich angeordnet sind, sind aus dem Stand der Technik verschiedene Lösungen bekannt, beispielsweise aus der DE 20 2005 015 520 U1, der GB 2 439 811 A, der EP 1 995 734 A2 und der EP 1 617 535 A1.

So ist beispielsweise in der DE 299 08 013 eine derartige Verbindungsanordnung für Kabelkanalsysteme beschrieben, welche ein Formstück umfasst, dessen Seitenkanten die Enden der Kabelkanalelemente übergreifen und wobei das Formstück ein festes Unterteil, dessen Querschnitt in etwa die Form eines Kreis- bis Ellipsenbogens besitzt, und ein elastisches Oberteil aufweist, welches einen mit dem Eckbereich korrespondierenden Ausschnitt besitzt und wobei das Unterteil mit dem Oberteil verbunden ist. Das Oberteil soll dabei aus einem Gummi bzw. aus einem elastischen Kunststoff bestehen.
Nachteilig bei dieser Verbindungsanordnung wird gesehen, dass das Unterteil bei unterschiedlich angeordneten Kabelkanalelementen nicht richtig den Eckbereich verschließt und beispielsweise bei Beanspruchungen von außen von den Kabelkanalelementen abfällt.
Ein weiterer Nachteil dieser Verbindungsanordnung besteht darin, dass es bei nichtrechtwinkligen Eckbereichen zur Spaltbildung entweder zwischen dem Unterteil und den Kabelkanalelementen oder zwischen den Kabelkanalelementen selbst kommt und dass das Oberteil den nicht rechtwinkligen Eckbereich ebenfalls nicht spaltfrei überdeckt.
Weiterhin nachteilig ist, dass durch die Wahl der unterschiedlichen Werkstoffe der Kabelkanalelemente, des Unterteils bzw. des Oberteils dazu führt, dass die Verbindungsanordnung und die Kabelkanalsysteme einen optisch unterschiedlichen Eindruck hinterlassen.

Die Eckbereiche von beispielsweise Gebäuden weichen jedoch in der Praxis häufig vom rechten Winkel ab, so dass es in solchen nicht rechtwinkligen Eckbereichen daher nicht möglich ist, eine optisch ansprechende und elektrisch sichere Verbindung zwischen einer starren Verbindungsanordnung und zwei geraden Kabelkanalelementen, welche in einem Winkel von entweder < 90°oder > 90°zueinander angeordnet sind, zu realisieren.

Die Verbindungsanordnung nach dem Stand der Technik sowie die Kabelkanalelemente passen nicht zusammen, so dass je nach Größe der Abweichungen der Fertigungstoleranzen der Kabelkanalelemente sowie der Verbindungsanordnung und der baulich bedingten Winkelabweichung des Eckbereiches Spalten zwischen der Verbindungsanordnung und den einzelnen Kabelkanalelementen entstehen, die Kabelkanalelemente nicht bündig mit den Mauern im Eckbereich abschließen oder dass die Verbindungsanordnung nicht bündig im Eckbereich mit dem Mauerwerk abschließen kann.
Weiterhin nachteilig ist, dass bei einer derartigen Montage der Verbindungsanordnung mit den dazugehörigen Kabelkanalelementen diese den baulichen Gegebenheiten insbesondere des Eckbereiches angepasst werden müssen und so unter Spannung montiert werden, was zu einer optischen Beeinträchtigung des Kabelkanalsystems führt.
Ebenfalls nachteilig wird gesehen, dass bei einer derartigen nicht winkligen Montage im Eckbereich auch die an der Verbindungsanordnung angeordneten Rastelemente nicht vollumfänglich bzw. auch nicht dauerhaft kraftschlüssig die Kabelkanalelemente fixieren können.
In solchen Situationen ist es erforderlich, dass zur Verlegung von Kabelkanalsystemen entsprechend verstellbare Verbindungsanordnungen zur Verfügung gestellt werden müssen.

Diese verstellbaren Verbindungsanordnungen sind aus dem Stand der Technik bekannt und bestehen in der Regel aus zwei mit den jeweiligen Kabelkanalelementen verbundenen Abdeckelementen, die miteinander gelenkig verbunden sind und gegeneinander verdrehbar bzw. verschiebbar angeordnet sind.

Eine Verbindungsanordnung für Kabelkanalsysteme, welche verstellbar ausgebildet ist, ist beispielsweise in der DE 20 2005 004 012 beschrieben.
Diese Verbindungsanordnung für Kabelkanalsysteme zur lösbaren Befestigung auf den Kabelkanalelementen weist federnde Rastmittel auf, die in die Kabelkanalelemente rastend hintergreifen. Die Verbindungsanordnung ist weiterhin so ausgebildet, dass diese Rastmittel durch zusätzliche Blockierschrauben und Stützwände abgesichert sein sollen. Diese haben die Funktion, dass nach der Verrastung der Kabelkanalelemente an der Verbindungsanordnung die Funktion der Rastmittel außer Kraft gesetzt sein soll, wobei keine Verbindung mehr mit den Kabelkanalelementen besteht.
Nachteilig bei dieser Verbindungsanordnung nach dem Stand der Technik wird gesehen, dass die Verbindungselemente der Verbindungsanordnung sehr kompliziert im Aufbau gestaltet und somit in der Herstellung kostenintensiv sind.
Weiterhin nachteilig bei dieser Verbindungsanordnung wird gesehen, dass bei deren Verlegung in nicht rechtwinkligen Eckbereichen ein Spalt zwischen den Verbindungselementen der Verbindungsanordnung zu den Kabelkanalelementen und zusätzlich noch ein Spalt an der Oberseite der Verbindungsanordnung zum Eckbereich der Wände entsteht.
Ebenfalls nachteilig bei dieser Verbindungsanordnung ist, dass die Blockierschraube bereits vor der Montage der Verbindunganordnung mit den daran blockierten Kabelkanalelementen erfolgen muss und erst danach deren Montage an der Wand, so dass spätere Korrekturen nicht oder nur sehr kostenintensiv möglich sind und auch eine Anpassung der Verbindungsanordnung mit den Kabelkanalsystemen an den jeweiligen Eckbereich sehr aufwendig ist.

Hier setzt die Erfindung ein, die sich die Aufgabe gestellt hat, eine Verbindungsanordnung für Kabelkanalsysteme aufzuzeigen, welche die genannten Nachteile des Standes der Technik überwindet, welche kostengünstig und wirtschaftlich herstellbar ist, welche schnell und sicher den Eckbereich der Kabelkanalsysteme überdeckend montierbar ist und bei deren Anordnung insbesondere im nicht rechtwinkligen Eckbereich keine Spaltbildung zu den Kabelkanalsystemen auftritt.
Erfindungsgemäß wird diese Aufgabe durch die Merkmale des Anspruches 1 gelöst. Weitere vorteilhafte Ausgestaltungen sind in den Unteransprüchen beschrieben.
Überraschend wurde festgestellt, dass Verbindungsanordnung für Kabelkanalsysteme die in einem Eckbereich angeordnet sind, umfassend wenigstens ein erstes Verbindungselement sowie wenigstens ein zweites Verbindungselement, wobei die Verbindungselemente wenigstens ein, mit dem Kabelkanalelement in Wirkverbindung bringbares Rastelement aufweisen, wobei die Verbindungselemente zueinander verdrehbar angeordnet sind und wobei das erste Verbindungselement, das eine Basisfläche, eine davon über eine Seitenfläche sowie über eine Stirnfläche beabstandet angeordnete Deckfläche sowie an der Seitenfläche angeordnete Rastelemente aufweist, das zweite Verbindungselement, das eine Basisfläche sowie eine über eine Seitenfläche mit dieser verbundenen Deckfläche aufweist, zumindest teilweise überdeckend umschließt, wobei das erste Verbindungselement wenigstens ein, an seiner Basisfläche und/oder seiner Deckfläche angeordnetes Drehelement aufweist, und das zweite Verbindungselement wenigstens eine, seine Basisfläche und/oder seine Deckfläche durchdringende, erste Öffnung, die als Langloch mit einer Breite, die in etwa dem Außendurchmesser des Drehelements entspricht, ausgebildet ist, aufweist, wobei das zweite Verbindungselement mit dem ersten Verbindungselement so in Wirkverbindung bringbar ist, dass das Drehelement des ersten Verbindungselements an der ersten Öffnung des zweiten Verbindungselements angeordnet und durch eine Verschiebbewegung der Verbindungselemente zueinander in die erste Öffnung des zweiten Verbindungselements hineingeschoben werden kann, wobei das Drehelement des ersten Verbindungselements bewegbar in der ersten Öffnung des zweiten Verbindungselements angeordnet ist, sich dadurch auszeichnet, dass die wenigstens eine erste Öffnung beabstandet zur Stirnseite der Basisfläche und/oder der Deckfläche und zur Seitenfläche angeordnet ist, und das zweite Verbindungselement weiter wenigstens eine parallel zur ersten Öffnung an der Basisfläche und/oder der Deckfläche angeordnete zweite Öffnung aufweist, welche von der ersten Öffnung über einen Steg, der derart ausgebildet ist, dass er bei der Montage soweit elastisch zur zweiten Öffnung verformt, dass das Drehelement des ersten Verbindungselementes am Ende der ersten Öffnung des zweiten Verbindungselementes einrastend drehbar gelagert ist, beabstandet ist. Durch diese vorteilhafte Ausgestaltung der erfindungsgemäßen Verbindungsanordnung für Kabelkanalsysteme ist eine Montage in Eckbereichen von beispielsweise Gebäuden, Räumen und dergleichen, die nicht rechtwinklig ausgebildet sind, jederzeit einfach und optisch ansprechend möglich. Die erfindungsgemäße Verbindungsanordnung für Kabelkanalsysteme zeichnet sich ebenfalls dadurch aus, dass die zueinander drehbar angeordneten Verbindungselemente der jeweiligen nicht rechtwinkligen Situation im Eckbereich sehr einfach anpassbar sind, ohne das im Bereich zu den Kabelkanalelementen, im Bereich zwischen den beiden Verbindungselementen bzw. im Bereich zu den Wänden der Gebäude, Räumen und dergleichen ein optisch unschöner und möglicherweise zugängiger Spalt entsteht.
Die erfindungsgemäße Verbindungsanordnung für Kabelkanalsysteme ist weiterhin so ausgebildet, dass das Drehelement des ersten Verbindungselementes einstückig an der Basisfläche und / oder der Deckfläche angeordnet ist. Hierdurch ist eine kostengünstige Herstellung der erfindungsgemäßen Verbindungsanordnung jederzeit möglich, sowie auch ein langjähriger, sicherer Einsatz der zueinander drehbar angeordneten Verbindungselemente.

Ein weiterer Vorteil der erfindungsgemäßen Verbindungsanordnung für Kabelkanalsysteme besteht darin, dass die erste Öffnung etwa parallel zur zweiten Öffnung an der Basisfläche und/oder der Deckfläche des zweiten Verbindungselements angeordnet ist. Durch diese vorteilhafte Ausgestaltung ist eine einfache Montage des ersten mit dem zweiten Verbindungselement zur erfindungsgemäßen Verbindungsanordnung für Kabelkanalsysteme möglich.

Es hat sich weiterhin als vorteilhaft herausgestellt, dass das zweite Verbindungselement wenigstens ein Anschlagelement aufweist. Dieses Anschlagelement kann konstruktiv so ausgelegt werden, dass vordefinierte Winkelstellungen zwischen dem ersten Verbindungselement und dem zweiten Verbindungselement einfach einstellbar sind. Das Anschlagelement kann dabei beispielsweise als Stufe bzw. Wanddickenreduzierung an wenigstens der Basisfläche und / oder der Seitenfläche und / oder der Deckfläche des zweiten Verbindungselementes realisiert sein.

Dabei hat es sich als vorteilhaft herausgestellt, dass in einer ersten Winkelstellung des ersten Verbindungselements zum zweiten Verbindungselement, welche etwa kleiner als 90° ist, das Anschlagelement des zweiten Verbindungselementes an der Basisfläche und / oder der Deckfläche des ersten Verbindungselementes anliegt.

Ebenfalls vorteilhaft bei der erfindungsgemäßen Verbindungsanordnung für Kabelkanalsysteme ist es, dass in einer zweiten Winkelstellung des ersten Verbindungselements zum zweiten Verbindungselement, welche größer als 90° ist, das Anschlagelement der Seitenfläche des zweiten Verbindungselements an der Stirnfläche des ersten Verbindungselementes anliegt.

Ein weiterer Vorteil der erfindungsgemäßen Verbindungsanordnung für Kabelkanalsysteme besteht darin, dass der Drehpunkt der Verbindungselemente in dieser vorteilhaften Ausführung nicht in der Mittelachse, welche als Linie zwischen dem ersten Verbindungselement und dem zweiten Verbindungselement zu definieren ist, sondern beabstandet im zweiten Verbindungselement angeordnet ist. Vorteilhaft bei dieser Ausführungsform ist, dass die von außen sichtbare Ecke zwischen dem ersten Verbindungselement und dem zweiten Verbindungselement immer winklig zueinander angeordnet ist und somit bei bestimmungsgemäßer Montage in beispielsweise Gebäuden, Möbelteilen bzw. Schreibtischen an der erfindungsgemäßen Verbindungsanordnung für Kabelkanalsysteme winklig anordenbar ist und somit eine optisch ansprechende Verbindungsanordnung für Kabelkanalsysteme zur Verfügung gestellt werden kann, die insbesondere bei nicht rechtwinkligen Eckbereichen von Gebäuden, Räumen und dergleichen leicht und sicher montierbar ist sowie ein optisch ansprechendes Aussehen aufweisen.

In einer weiteren vorteilhaften Ausführungsform der erfindungsgemäßen Verbindungsanordnung für Kabelkanalsysteme weist das Drehelement des ersten Verbindungselementes wenigstens ein Basiselement sowie wenigstens ein Fixierelement auf.
Das Basiselement kann dabei einstückig mit der Basisfläche und / oder der Deckfläche des ersten Verbindungselements verbunden sein. Das Fixierelement ist so am Basiselement des Drehelements angeordnet, dass es von der jeweiligen Basisfläche und / oder Deckfläche des ersten Verbindungselementes beanstandet angeordnet das Basiselement zumindest teilweise überdeckt. Das Fixierelement kann dabei sowohl einstückig am Basiselement als auch kraft- und / oder formschlüssig an diesem angeordnet sein. Das Basiselement des Drehelementes ist im Querschnitt etwa rund, oval, prismatisch, mehreckig und dergleichen ausgebildet. Das Fixierelement weist im Querschnitt gesehen eine größere Fläche auf, welche etwa doppelt so groß ist.

Dabei kann es vorteilhaft sein, wenn das Drehelement des ersten Verbindungselementes eine Höhe aufweist, die wenigstens der Wanddicke der Basisfläche und / oder der Deckfläche des zweiten Verbindungselementes entspricht. Hierdurch ist vorteilhafterweise eine einfache und werkzeuglose Verdrehung der Verbindungselemente der erfindungsgemäßen Verbindungsanordnung für Kabelkanalsysteme einfach möglich. Weiterhin ist es durch die Dimensionierung der Höhe des Drehelements insbesondere des Basiselementes sowie des daran angeordneten Fixierelementes möglich, den Kraftaufwand für die Verdrehung des ersten Verbindungselementes zum zweiten Verbindungselement einzustellen.

In einer weiteren vorteilhaften Ausführungsform der erfindungsgemäßen Verbindungsanordnung sind an der Basisfläche und / oder der Deckfläche der Verbindungselemente von diesen wegragende Führungselemente angeordnet. Diese sind vorteilhafterweise so ausgebildet, dass sie mit einer am Kabelkanalelement angeordneten Nut bei der Einführung der Kabelkanalelemente in die erfindungsgemäße Verbindungsanordnung in Wirkverbindung stehen und so nicht nur für eine optisch ansprechende Verlegung der Verbindungsanordnung für Kabelkanalsysteme sorgen sondern auch dafür, dass die Kabelkanalelemente über die Führungselemente der Verbindungselemente und die an den Verbindungselementen angeordneten Rastelemente form- und kraftschlüssig und somit sicher fixiert sind.

Es hat sich weiterhin als vorteilhaft herausgestellt, dass die Basisfläche und / oder die Deckfläche des zweiten Verbindungselementes wenigstens eine um etwa eine halbe Wanddicke versetzt angeordnete Fläche aufweist. In dieser versetzt angeordneten Fläche ist die erste Öffnung des zweiten Verbindungselementes in etwa einem spitzen Winkel zur Außenkante der Basisfläche angeordnet. Die erste Öffnung des zweiten Verbindungselementes ist als Langloch ausgebildet und weist an seiner von der Stirnseite der Basisfläche des zweiten Verbindungselementes beabstandet einen als Raststelle ausgebildeten Hinterschnitt auf. Die Wanddicke der versetzt angeordneten Fläche des zweiten Verbindungselementes ist so dimensioniert, dass bei der Montage sowie bei der Verdrehbewegung des Verbindungselementes zum zweiten Verbindungselement das Basiselement des ersten Verbindungselementes in der Öffnung angeordnet vom Hinterschnitt fixiert ist, während das am Basiselement angeordnete Fixierelement des ersten Verbindungselementes auf dieser versetzt angeordneten Fläche aufsitzt und bewegbar angeordnet ist.

Es hat sich weiterhin vorteilhaft herausgestellt, dass die erfindungsgemäße Verbindungsanordnung für Kabelkanalsysteme aus einem polymeren Werkstoff hergestellt ist. Unter polymerem Werkstoff sind Materialien gemeint, wie Polyvinylchlorid (PVC); Polyolefin, wie Polypropylen (PP) oder Polyethylen (PE); styrolbasiertes Polymer, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyphenylenoxid (PPO); Polyetheretherketon (PEEK); Polyphenylensulfid (PPS); Liquid Crystal Polymer (LCP); Polyamidimide (PAI); Polyvinylidenfluorid (PVDF); Polyphenylsulfon (PPSU); Polyaryletherketon (PAEK); Polyacrylnitril (PAN); Polychlortrifluorethylen (PCTFE); Polyetherketon (PEK); Polyimid (PI); Polyisobuten (PIB); Polyphthalamid (PPA); Polypyrrol (PPY); Polytetrafluorethylen (PTFE); Polyurethan (PUR); Polyvinylalkohol (PVA); Polyvinylacetat (PVAC); Polyvinylidenchlorid (PVDC); sowie Mischungen aus wenigstens zwei dieser Materialien. Dabei können dem polymeren Werkstoff des Abdeckelementes geeignete Füll- und / oder Verstärkungsstoffe beigemischt sein, die die mechanischen Eigenschaften positiv beeinflussen insbesondere Glasfaser, Glaskugeln aber auch Füllstoffe wie Kreide, Teflon und dergleichen.
Hierdurch ist es vorteilhafterweise möglich, die Herstellungskosten der erfindungsgemäßen Kabelkanalsysteme in einem überschaubaren Rahmen zu gestalten und andererseits durch an sich bekannte Extrusions- bzw. Koextrusionsverfahren optisch und farblich ansprechende Kabelkanalsysteme zur Verfügung zu stellen, welche sowohl nicht korrodieren als auch nicht elektrisch leitfähig sind.

Die erfindungsgemäße Verbindungsanordnung für Kabelkanalsysteme zeichnet sich weiterhin dadurch aus, dass sie sowohl für Kabelkanalsysteme aus polymeren Werkstoffen als auch aus metallischen Werkstoffen zu einer optisch ansprechenden und wirtschaftlichen Verlegung insbesondere im nicht rechtwinkligen Eckbereich von beispielsweise Gebäuden geeignet ist.
Die Erfindung soll nun an Ausführungsbeispielen, die diese nicht einschränken sollen, näher beschrieben werden.

Es zeigen:
- Fig. 1: Perspektivische Darstellung einer erfindungsgemäßen Verbindungsanordnung für Kabelkanalsysteme.
- Fig. 2: Perspektivische Darstellung der Rückseite einer erfindungsgemäßen Verbindungsanordnung für Kabelkanalsysteme.
- Fig. 3: Perspektivische Darstellung des ersten Verbindungselements der erfindungsgemäßen Verbindungsanordnung.
- Fig. 4: Perspektivische Darstellung des zweiten Verbindungselements der erfindungsgemäßen Verbindungsanordnung.

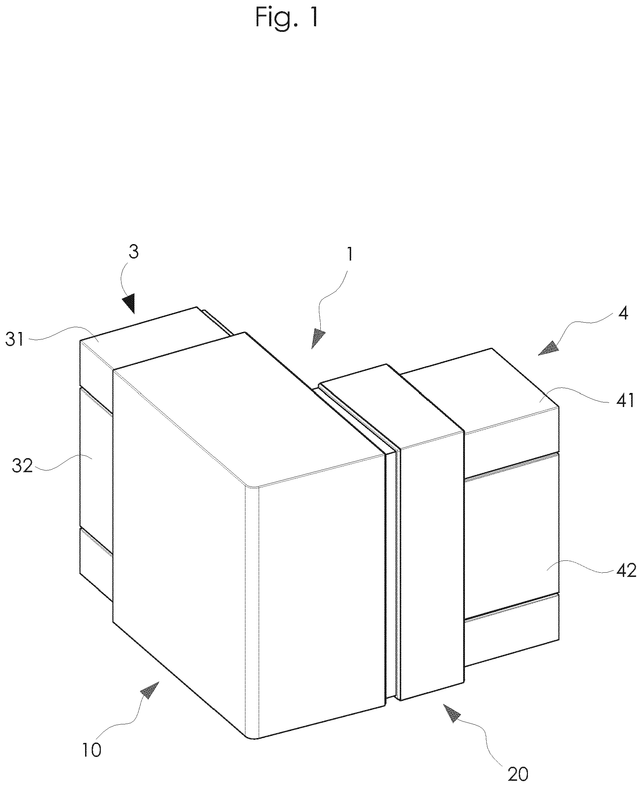

In der Fig. 1 ist eine perspektivische Darstellung der erfindungsgemäßen Verbindungsanordnung 1 für Kabelkanalsysteme 3, 4 dargestellt.
Die Verbindungsanordnung 1 für Kabelkanalsysteme 3, 4, die in einem Eckbereich angeordnet sind, umfasst ein erstes Verbindungselement 10 sowie ein zweites Verbindungselement 20, wobei die Verbindungselemente 10, 20 zueinander verdrehbar angeordnet sind und wobei das erste Verbindungselement 10 das zweite Verbindungselement 20 zumindest teilweise überdeckend umschließt.
Das Kabelkanalsystem 3, 4 umfasst in diesem Ausführungsbeispiel ein etwa U-förmiges Kanalunterteil 31, 41 sowie insbesondere einer daran anordenbaren Abdeckung 32, 42, welche über an sich bekannte Rastverbindungen mit dem etwa U-förmigen Kanalunterteil 31, 41 verbunden ist. Das Kabelkanalsystem 3, 4, welches in der Fig. 1 nur abschnittsweise dargestellt ist, ist jeweils in einem etwa rechten Winkel zueinander angeordnet in der erfindungsgemäßen Verbindungsanordnung 1 eingebracht.
Die erfindungsgemäße Verbindungsanordnung 1 für Kabelkanalsysteme 3, 4 ist so ausgebildet, dass sie an einem Eckbereich beispielsweise eines Gebäudes, eines Raumes und dergleichen so anbringbar ist, dass die einander gegenüberliegend angeordneten Kabelkanalsysteme 3, 4 sowohl in einem rechten Winkel von 90° als auch in Winkeln von weniger als 90°, wie beispielsweise 85° bis 90°, aber auch in Winkeln größer als 90°, wie beispielsweise 91° bis 95°, anordenbar sind.
Dabei ist die erfindungsgemäße Verbindungsanordnung 1 so ausgebildet, dass sich zwischen dem ersten Verbindungselement 10 und dem Kabelkanalsystem 3 sowie dem zweiten Verbindungselement 20 und dem Kabelkanalsystem 4 im direkten Übergangsbereich kein Spalt bildet. Weiterhin wird bei bestimmungsgemäßer Montage der erfindungsgemäßen Verbindungsanordnung 1 für Kabelkanalsysteme 3, 4 in einem Eckbereich auch zwischen dem ersten Verbindungselement 10 und dem zweiten Verbindungselement 20 kein Spalt entstehen, egal in welcher Winkelstellung die Verbindungselemente 10, 20 zueinander angeordnet sind.

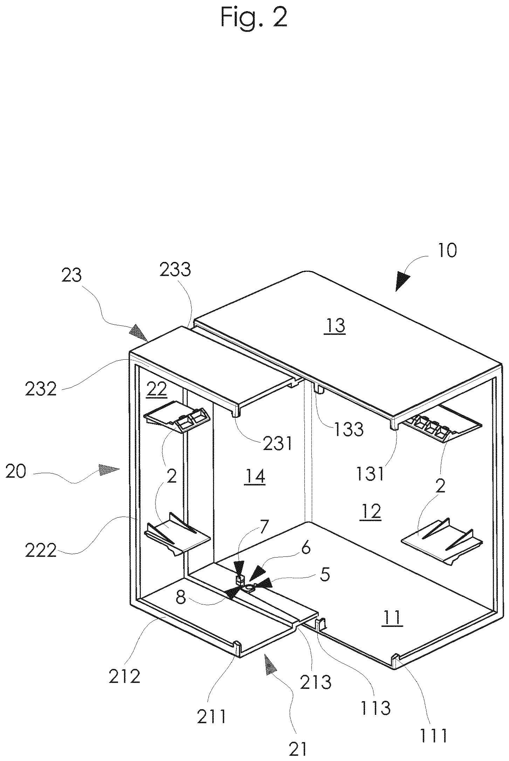

In der Fig. 2 ist eine perspektivische Rückansicht der erfindungsgemäßen Verbindungsanordnung 1 für Kabelkanalsysteme dargestellt.
Die Verbindungsanordnung 1 für Kabelkanalsysteme, welche in dieser Abbildung nicht dargestellt sind, ist in einem Eckbereich angeordnet, umfasst ein erstes Verbindungselement 10 sowie ein zweites Verbindungselement 20, wobei die Verbindungselemente 10, 20 wenigstens ein mit dem Kabelkanalelement in Wirkverbindung bringbares Rastelement 2 aufweisen, die Verbindungselemente 10, 20 zueinander verdrehbar angeordnet sind und das erste Verbindungselement 10 das zweite Verbindungselement 20 zumindest teilweise überdeckend umschließt.

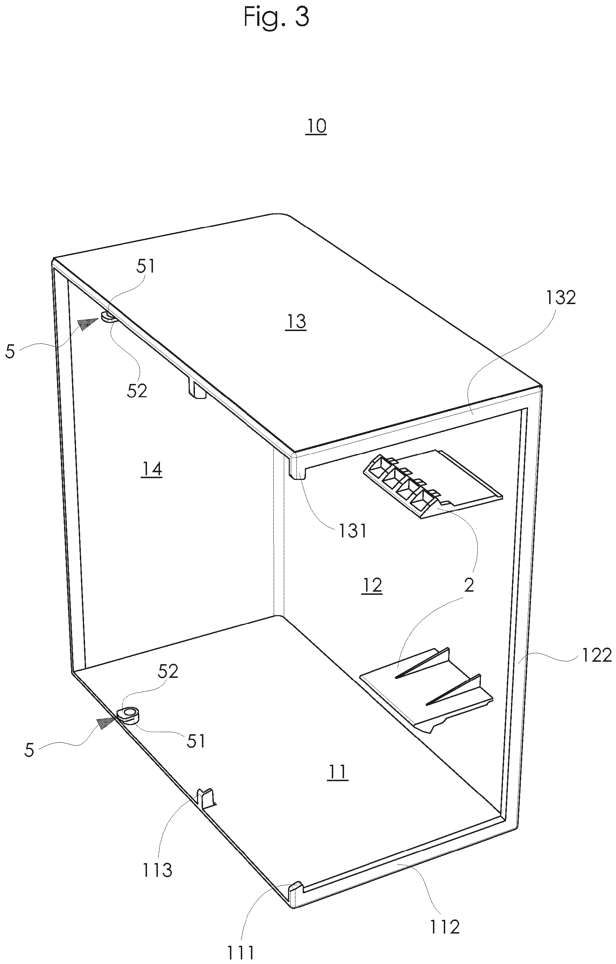

Das erste Verbindungselement 10 weist an seiner Basisfläche 11 ein Drehelement 5 auf, welches im Detail nochmals in der Fig. 3 näher dargestellt und beschrieben ist.

Das zweite Verbindungselement 20 weist eine seine Basisfläche 21 durchdringende erste Öffnung 6 auf sowie wenigstens eine davon über den Steg 8 beabstandete zweite Öffnung 7.
Das Drehelement 5 des ersten Verbindungselementes 10 ist in diesem Ausführungsbeispiel drehbar in der ersten Öffnung 6 des zweiten Verbindungselementes 20 angeordnet.
Durch diese vorteilhafte Ausgestaltung der erfindungsgemäßen Verbindungsanordnung 1 für Kabelkanalsysteme ist es somit einfach möglich, nicht rechtwinklige Eckbereiche von Gebäuden, Räumen und dergleichen mit derartigen Kabelkanalsystemen zu bestücken.
In diesem Ausführungsbeispiel ist das Drehelement 5 einstückig an der Basisfläche 11 des ersten Verbindungselementes 10 angeordnet.
Von der ersten Öffnung 6 des zweiten Verbindungselementes 20 ist die zweite Öffnung 7 beabstandet angeordnet. Die erste Öffnung 6 ist etwa parallel zur zweiten Öffnung 7 an der Basisfläche 21 des zweiten Verbindungselementes 20 angeordnet.
Das zweite Verbindungselement 20 wird mit dem ersten Verbindungselement 10 so in Wirkverbindung gebracht, dass das Drehelement 5 des ersten Verbindungselementes 10 an der ersten Öffnung 6 des zweiten Verbindungselementes 20 angeordnet und durch eine Verschiebebewegung der Verbindungselemente 10, 20 zueinander in die erste Öffnung 6 des zweiten Verbindungselementes 20 hineingeschoben ist.
Bei dieser Montage wird der Steg 8, welcher die erste Öffnung 6 von der zweiten Öffnung 7 des zweiten Verbindungselementes 20 trennt, soweit elastisch zur zweiten Öffnung 7 verformt, dass das Drehelement 5 des ersten Verbindungselementes 10 am Ende der ersten Öffnung 6 des zweiten Verbindungselementes 20 einrastend drehbar gelagert ist.

Das erste Verbindungselement 10 weist erfindungsgemäß eine Basisfläche 11, eine davon über eine Seitenfläche 12 sowie über eine Stirnfläche 14 beabstandet angeordnete Deckfläche 13 sowie an der Seitenfläche 12 angeordnete Rastelemente 2 auf. An den freien Enden der Basisfläche 11 sowie der Deckfläche 13 des ersten Verbindungselementes 10 sind Führungselemente 111, 113, 131, 133 einstückig angeformt.
Die Führungselemente 111, 113, 131, 133 treten bei bestimmungsgemäßer Verwendung der erfindungsgemäßen Verbindungsanordnung 1 mit einer Nut eines Kabelkanalelementes in Wirkverbindung, so dass dieses hier nicht dargestellte Kabelkanalelement an der Seitenfläche 12 des ersten Verbindungselementes 10 so anliegt, dass die Rastelemente 2 mit dem Kabelkanalelement verrasten.

Das zweite Verbindungselement 20 weist eine Basisfläche 21 sowie eine über die Seitenfläche 22 mit dieser verbundenen Deckfläche 23 auf. An der Seitenfläche 22 sind ebenfalls voneinander beabstandet Rastelemente 2 einstückig angeformt.
Das zweite Verbindungselement 20 weist an seiner Basisfläche 21 sowie an seiner Deckfläche 23 Führungselemente 211, 231 auf, die ebenfalls so ausgebildet und angeordnet sind, dass sie mit einem hier nicht dargestellten Kabelkanalelement an einer Nut in Wirkverbindung treten.
An der Basisfläche 21, der Seitenfläche 22 sowie der Deckfläche 23 des zweiten Verbindungselementes 20 ist ein umlaufender Rand 212, 222, 232 angeordnet, der zur weiteren Führung des in das zweite Verbindungselement 20 einbringbaren Kabelkanalsystems dient.

Das zweite Verbindungselement 20 weist in diesem Ausführungsbeispiel an seiner Basisfläche 21 das Anschlagelement 213 sowie an seiner Deckfläche 23 das Anschlagelement 233 auf. Das Anschlagelement 213, 233 ist in diesem Ausführungsbeispiel als Stufe in der Basisfläche 21 und der Deckfläche 23 ausgebildet.

Im hier dargestellten Ausführungsbeispiel ist das erste Verbindungselement 10 etwa orthogonal zum zweiten Verbindungselement 20 ausgebildet.

Bei Montage der erfindungsgemäßen Verbindungsanordnung 1 in nicht rechtwinkligen Eckbereichen erfolgt über das Drehelement 5 des ersten Verbindungselementes 10 in Wirkverbindung mit der ersten Öffnung 6 des zweiten Verbindungselementes 20 eine Drehbewegung der Verbindungselemente 10, 20 zueinander.
In einer ersten Winkelstellung des ersten Verbindungselementes 10 zum zweiten Verbindungselement 20, welche kleiner als 90° ist, liegt das Anschlagelement 213, 233 des zweiten Verbindungselementes 20 an der Stirnseite der Basisfläche 11 und / oder der Deckfläche 13 des ersten Verbindungselementes 10 an.
Hierdurch ist vorteilhafterweise gewährleistet, dass im Sichtbereich zwischen dem ersten Verbindungselement 10 und dem zweiten Verbindungselement 20 kein Spalt entsteht und die Verbindungsanordnung 10 optisch ansprechend einen derart nicht rechtwinkligen Eckbereich abdeckt.

In einer zweiten Winkelstellung des ersten Verbindungselementes 10 zum zweiten Verbindungselement 20, welche größer als 90° ist, liegt das Anschlagelement 233 des zweiten Verbindungselementes 20 an der Stirnfläche 14 des ersten Verbindungselementes 10 an.

Auch hierdurch ist vorteilhafterweise gewährleistet, dass die erfindungsgemäße Verbindungsanordnung 1 im Sichtbereich keine Spaltbildung aufweist und dass wiederum ein nicht rechtwinkliger Eckbereich optisch ansprechend abgedeckt ist.

Die erfindungsgemäße Verbindungsanordnung 1 für Kabelkanalsysteme 3, 4 zeichnet sich dadurch aus, dass der Drehpunkt, über den das erste Verbindungselement 10 zum zweiten Verbindungselement 20 drehbar ist, nicht direkt auf der Mittelachse, welche als gedachte Linie am Schnittpunkt des ersten Verbindungselementes 10 zum zweiten Verbindungselement 20 ist, sondern dass der Drehpunkt, umfassend das drehbar in der Öffnung 6 des zweiten Verbindungselementes 20 angeordnete Drehelement 5 des ersten Verbindungselementes 10 beabstandet von der Stirnfläche 14 des ersten Verbindungselementes 10 und/oder von der Seitenfläche 22 des zweiten Verbindungselementes 20 angeordnet ist.

Ein weiterer Vorteil der erfindungsgemäßen Verbindungsanordnung 1 für Kabelkanalsysteme 3, 4 besteht darin, dass der Drehpunkt zwischen den Verbindungselementen 10, 20 direkt im Bereich der Basisfläche 21 und / oder der Deckfläche 23 des zweiten Verbindungselementes 20 angeordnet ist. Hierdurch ist die erfindungsgemäße Verbindungsanordnung 1 für Kabelkanalsysteme 3, 4 vorteilhafterweise geeignet für alle Eckbereiche in Gebäuden, Räumen und dergleichen, die sowohl rechtwinklig als auch nicht rechtwinklig sind, leicht und sicher montiert zu werden und gleichzeitig immer ein optisch ansprechendes Aussehen aufweist durch die immer winklig zueinander angeordneten Verbindungselemente 10, 20.

In der Fig. 3 ist eine perspektivische Darstellung des ersten Verbindungselementes 10 der erfindungsgemäßen Verbindungsanordnung 1 dargestellt.
Das erste Verbindungselement 10 ist hierbei so ausgestaltet, dass es eine Basisfläche 11 und einer von dieser über eine Seitenfläche 12 und eine Stirnfläche 14 beabstandete Deckfläche 13 aufweist. Die Flächen 11, 12, 13, 14 sind in diesem Ausführungsbeispiel viereckig, insbesondere rechteckig ausgebildet.
An der Basisfläche 11 sowie der Deckfläche 13 des ersten Verbindungselementes 10 ist ein Drehelement 5 angeordnet, welches in diesem Ausführungsbeispiel einstückig angeordnet ist. Das Drehelement 5 weist in diesem Ausführungsbeispiel ein Basiselement 51 sowie ein Fixierelement 52 auf.

Das Basiselement 51 des Drehelementes 5 ist in diesem Ausführungsbeispiel im Querschnitt etwa rund ausgebildet. Es liegt jedoch auch im Rahmen der Erfindung, dass das Basiselement 51 des Drehelementes 5 im Querschnitt etwa oval, prismatisch, mehreckig und dergleichen ausgebildet ist.
Das Basiselement 51 des Drehelementes 4 weist in diesem Ausführungsbeispiel einen Außendurchmesser auf, der in etwa der Breite der hier nicht dargestellten ersten Öffnung 6 des zweiten Verbindungselementes 20 entspricht.
Beabstandet von der Basisfläche 11 und / oder der Deckfläche 13 des ersten Verbindungselementes 10 ist das Fixierelement 52 am Basiselement 51 des Drehelementes 5 angeordnet. Das Fixierelement 52 ist in diesem Ausführungsbeispiel so ausgestaltet, dass es im Querschnitt eine größere Fläche umfasst als das Basiselement 51.
Das Fixierelement 52 des Drehelementes 5 ist in seinem Querschnitt etwa oval ausgebildet und weist zumindest teilweise über die Stirnseite der Basisfläche 11 bzw. der Deckfläche 13 des ersten Verbindungselementes 10 hinaus.
Das Drehelement 5 ist in diesem Ausführungsbeispiel einstückig über das Basiselement 51 mit der Basisfläche 11 bzw. der Deckfläche 13 verbunden, wobei das Fixierelement 52 ebenfalls einstückig am Basiselement 51 des Drehelementes 5 angeordnet ist.
Es liegt jedoch auch im Rahmen der Erfindung, dass das Fixierelement 52 kraft- und / oder formschlüssig am Basiselement 51 des Drehelementes 5 anordenbar ist.

Das erste Verbindungselement 10 ist in diesem Ausführungsbeispiel weiterhin so ausgebildet, dass an der Seitenfläche 12 Rastelemente 2 voneinander beabstandet angeordnet sind, welche einstückig mit der Seitenfläche 12 des ersten Verbindungselementes 10 verbunden sind.
Die Basisfläche 11 sowie die Deckfläche 13 weisen in diesem Ausführungsbeispiel Führungselemente 111, 113, 131, 133 auf, welche an den der Seitenfläche 12 gegenüberliegenden freien Enden der Flächen 11, 13 angeordnet sind.
Dabei ist das Führungselement 113, 133 jeweils beabstandet vom Führungselement 111, 131 angeordnet. Dies dient vorteilhafterweise dazu, dass bei bestimmungsgemäßem Gebrauch der erfindungsgemäßen Verbindungsanordnung 1 ein hier nicht dargestelltes Kabelkanalelement in das erste Verbindungselement 10 einbringbar ist, wobei dieses am ersten Führungselement 111, 131 angesetzt in das erste Verbindungselement 10 hineingeschoben und vom zweiten Führungselement 113, 133 weiterführbar und positionierbar ist.

Die Basisfläche 11, die Seitenfläche 12 sowie die Deckfläche 13 weisen in diesem Ausführungsbeispiel jeweils einen rechtwinklig daran angeordneten Rand 112, 122, 132 auf, der bei bestimmungsgemäßem Gebrauch der erfindungsgemäßen Verbindungsanordnung 1 mit der Außenkontur des hier nicht dargestellten Kabelkanalelementes in direktem Kontakt steht.

Das Drehelement 5 des ersten Verbindungselementes 10 weist in diesem Ausführungsbeispiel eine Gesamthöhe auf, die in etwa der Wanddicke der Basisfläche 21 und / oder der Deckfläche 23 des zweiten Verbindungselementes 20 entspricht. Dabei entspricht der Abstand des Fixierelementes 52 von der Basisfläche 11 sowie der Deckfläche 13 des ersten Verbindungselementes 10 in etwa der Dicke der versetzt angeordneten Fläche 210, 230 des zweiten Verbindungselementes 20.

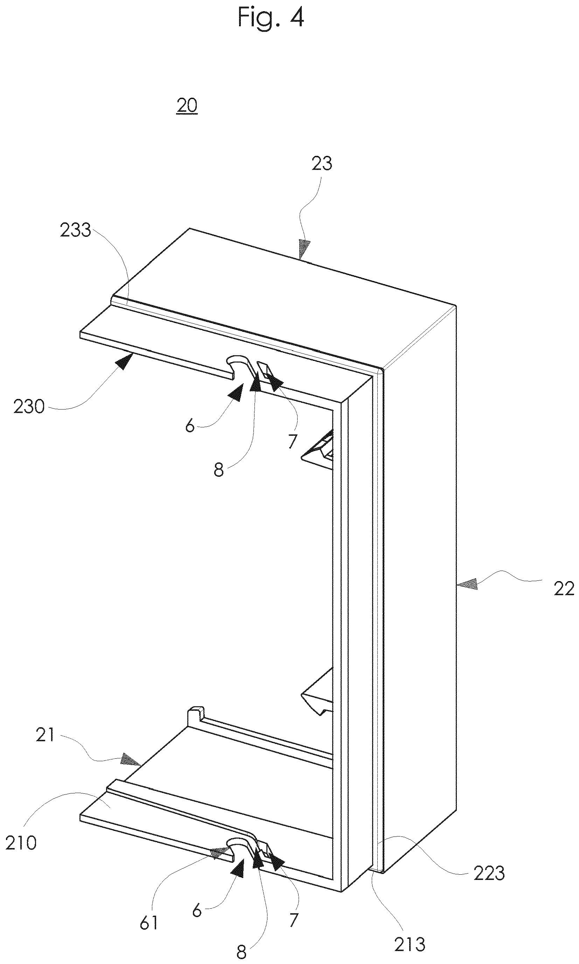

In der Fig. 4 ist eine perspektivische Darstellung des zweiten Verbindungselementes 20 der erfindungsgemäßen Verbindungsanordnung 1 dargestellt.

Das zweite Verbindungselement 20 weist erfindungsgemäß eine Basisfläche 21 sowie eine von dieser über eine Seitenfläche 22 beabstandete Deckfläche 23 auf.
In der Basisfläche 21 sowie der Deckfläche 23 ist die erste Öffnung 6 angeordnet, welche als Langloch ausgebildet ist.
Die erste Öffnung 6 ist dabei in einem etwa spitzen Winkel von etwa 45° zur Stirnseite der Basisfläche 21 bzw. zur Deckfläche 23 angeordnet.
Die Breite der ersten Öffnung 6 ist dabei so dimensioniert, dass sie in etwa dem Außendurchmesser des hier nicht dargestellten Basiselementes 51 des Drehelementes 5 des ersten Verbindungselementes 10 entspricht.
Weiterhin ist in der ersten Öffnung 6 beabstandet zur Stirnseite der Basisfläche 21 bzw. zur Deckfläche 23 ein als Hinterschnitt ausgebildetes Rastelement 61 angeordnet.
Dieses als Hinterschnitt ausgebildete Rastelement 61 dient dazu, dass bei bestimmungsgemäßer Montage des ersten Verbindungselementes 10 mit dem zweiten Verbindungselement 20 das nicht dargestellte Basiselement 51 des Drehelementes 5 drehbar fixiert ist.

Weiterhin ist in der Basisfläche 21 sowie der Deckfläche 23 eine von der ersten Öffnung 6 über einen Steg 8 beabstandete zweite Öffnung 7 angeordnet. Die zweite Öffnung 7 ist in etwa parallel zur ersten Öffnung 6 und ebenfalls in einem spitzen Winkel zur Stirnseite der Basisfläche 21 sowie der Deckfläche 23 angeordnet.

Bei der Montage des ersten Verbindungselementes 10 mit dem zweiten Verbindungselement 20 zur erfindungsgemäßen Verbindungsanordnung 1 wird das jeweilige Basiselement 51 des Drehelementes 5 an der ersten Öffnung 6 des zweiten Verbindungselementes 20 angesetzt und soweit in die erste Öffnung 6 des zweiten Verbindungselementes 20 verschoben, bis das Basiselement 51 des Drehelementes 5 nach dem als Hinterschnitt ausgebildeten Rastelement 61 einrastet.
Bei dieser Montage erfolgt eine elastische Deformierung des die erste Öffnung 6 von der zweiten Öffnung 7 trennenden Steges 8, so dass das erste Verbindungselement 10 einfach und ohne großen Kraftaufwand mit dem zweiten Verbindungselement 20 formschlüssig verbindbar ist.
Dabei ist die Basisfläche 21 und die Deckfläche 23 des zweiten Verbindungselementes 20 so ausgebildet, dass sie eine versetzt um etwa eine halbe Wanddicke angeordnete Fläche 210, 230 aufweisen. Die Dicke der versetzt angeordneten Fläche 210, 230 ist so gewählt, dass diese das nicht dargestellte Fixierelement 52 des Drehelementes 5 des ersten Verbindungselementes 10 so untergreift, dass die Verbindungselemente 10, 20 zueinander verdrehbar sind.

Das zweite Verbindungselement 20 ist weiterhin so ausgebildet, dass es ein Anschlagelement 213, 223, 233 aufweist. Dieses Anschlagelement 213, 223, 233 ist stufenförmig in der Basisfläche 21, der Seitenfläche 22 sowie der Deckfläche 23 angeordnet.
Insbesondere die Position des Anschlagelementes 223 an der Seitenfläche 22 sorgt für die zweite Winkelstellung des ersten Verbindungselementes 10 zum zweiten Verbindungselement 20, welche größer als 90° dimensionierbar ist, so dass das Anschlagelement 223 des zweiten Verbindungselementes 20 an der Stirnfläche 14 des nicht dargestellten ersten Verbindungselementes 10 anliegt.
In diesem Ausführungsbeispiel ist das Anschlagelement 213, 223, 233 jeweils an der gleichen Position der Fläche 21, 22, 23 angeordnet.
Es liegt jedoch auch im Rahmen der Erfindung, dass beispielsweise das Anschlagelement 223 der Seitenfläche 22 unterschiedlich beabstandet zum Anschlagelement 213 der Basisfläche 21 und / oder zum Anschlagelement 233 der Deckfläche 23 angeordnet ist.

## Patentansprüche

1. Verbindungsanordnung (1) für Kabelkanalsysteme (3, 4), die in einem Eckbereich angeordnet sind, umfassend wenigstens ein erstes Verbindungselement (10) sowie wenigstens ein zweites Verbindungselement (20), wobei die Verbindungselemente (10, 20) wenigstens ein, mit dem Kabelkanalelement (31, 41) in Wirkverbindung bringbares Rastelement (2) aufweisen, wobei die Verbindungselemente (10, 20) zueinander verdrehbar angeordnet sind und wobei das erste Verbindungselement (10), das eine Basisfläche (11), eine davon über eine Seitenfläche (12) sowie über eine Stirnfläche (14) beabstandet angeordnete Deckfläche (13) sowie an der Seitenfläche (12) angeordnete Rastelemente (2) aufweist, das zweite Verbindungselement (20), das eine Basisfläche (21) sowie eine über eine Seitenfläche (22) mit dieser verbundenen Deckfläche (23) aufweist, zumindest teilweise überdeckend umschließt, wobei das erste Verbindungselement (10) wenigstens ein, an seiner Basisfläche (11) und/oder seiner Deckfläche (12) angeordnetes Drehelement (5) aufweist, und das zweite Verbindungselement (20) wenigstens eine, seine Basisfläche (21) und/oder seine Deckfläche (22) durchdringende, erste Öffnung (6), die als Langloch mit einer Breite, die in etwa dem Außendurchmesser des Drehelements (5) entspricht, ausgebildet ist, aufweist, wobei das zweite Verbindungselement (20) mit dem ersten Verbindungselement (10) so in Wirkverbindung bringbar ist, dass das Drehelement (5) des ersten Verbindungselements (10) an der ersten Öffnung (6) des zweiten Verbindungselements (20) angeordnet und durch eine Verschiebbewegung der Verbindungselemente (10, 20) zueinander in die erste Öffnung (6) des zweiten Verbindungselements (20) hineingeschoben werden kann, wobei das Drehelement (5) des ersten Verbindungselements (10) bewegbar in der ersten Öffnung (6) des zweiten Verbindungselements (20) angeordnet ist, **dadurch gekennzeichnet, dass** die wenigstens eine erste Öffnung (6) beabstandet zur Stirnseite der Basisfläche (21) und/oder der Deckfläche (23) und zur Seitenfläche (22) angeordnet ist, und das zweite Verbindungselement (20) weiter wenigstens eine parallel zur ersten Öffnung (6) an der Basisfläche (21) und/oder der Deckfläche (23) angeordnete zweite Öffnung (7) aufweist, welche von der ersten Öffnung (6) über einen Steg (8), der derart ausgebildet ist, dass er bei der Montage soweit elastisch zur zweiten Öffnung (7) verformt, dass das Drehelement (5) des ersten Verbindungselementes (10) am Ende der ersten Öffnung (6) des zweiten Verbindungselementes (20) einrastend drehbar gelagert ist, beabstandet ist.

2. Verbindungsanordnung (1) nach Anspruch 1, **dadurch gekennzeichnet, dass** das Drehelement (5) des ersten Verbindungselements (10) einstückig an der Basisfläche (11) und/oder der Deckfläche (13) angeordnet ist.

3. Verbindungsanordnung (1) nach einem der vorhergehenden Ansprüche, **dadurch gekennzeichnet, dass** die erste Öffnung (6) etwa parallel zur zweiten Öffnung (7) an der Basisfläche (21) und/oder der Deckfläche (23) des zweiten Verbindungselements (20) angeordnet ist.

4. Verbindungsanordnung (1) nach einem der vorhergehenden Ansprüche, **dadurch gekennzeichnet, dass** das zweite Verbindungselement (20) wenigstens ein Anschlagelement (213, 223, 233) aufweist.

5. Verbindungsanordnung (1) nach einem der vorhergehenden Ansprüche, **dadurch gekennzeichnet, dass** in einer ersten Winkelstellung des ersten Verbindungselements (10) zum zweiten Verbindungselement (20), welche kleiner als 90° ist, das Anschlagelement (213, 233) des zweiten Verbindungselements (20) wenigstens teilweise an einer Fläche (11, 13) des ersten Verbindungselements (10) im anliegt.

6. Verbindungsanordnung (1) nach einem der vorhergehenden Ansprüche, **dadurch gekennzeichnet, dass** in einer zweiten Winkelstellung des ersten Verbindungselements (10) zum zweiten Verbindungselement (20), welche größer als 90° ist, das Anschlagelement (223) des zweiten Verbindungselements (20) wenigstens teilweise an der Stirnfläche (14) des ersten Verbindungselements (10) im anliegt.

7. Verbindungsanordnung (1) nach einem der vorhergehenden Ansprüche, **dadurch gekennzeichnet, dass** der Drehpunkt, umfassend das in der Öffnung (6) des zweiten Verbindungselementes (20) angeordnete Drehelement (5) des ersten Verbindungselementes (10) in der Basisfläche (21) und/oder der Deckfläche (23) des zweiten Verbindungselementes (20) angeordnet ist.

8. Verbindungsanordnung (1) nach einem der vorhergehenden Ansprüche, **dadurch gekennzeichnet, dass** der Drehpunkt der Verbindungselemente (10, 20), umfassend das in der Öffnung (6) des zweiten Verbindungselementes (20) angeordnete Drehelement (5) des ersten Verbindungselementes (10) beabstandet von der Seitenwand (22) des zweiten Verbindungselementes (20) und/oder beabstandet von der Stirnfläche (14) des ersten Verbindungselementes (10) angeordnet ist.

9. Verbindungsanordnung (1) nach einem der vorhergehenden Ansprüche, **dadurch gekennzeichnet, dass** das Drehelement (5) des ersten Verbindungselements (10) wenigstens ein Basiselement (51) sowie wenigstens ein Fixierelement (52) aufweist.

10. Verbindungsanordnung (1) nach einem der vorhergehenden Ansprüche, **dadurch gekennzeichnet, dass** das Drehelement (5) des ersten Verbindungselements (10) eine Höhe aufweist, die wenigstens der Wanddicke der Basisfläche (21) und/oder der Deckfläche (23) des zweiten Verbindungselements (20) entspricht.

11. Verbindungsanordnung (1) nach einem der vorhergehenden Ansprüche, **dadurch gekennzeichnet, dass** die Basisfläche (21) und/oder die Deckfläche (23) des Verbindungselements (10, 20) wenigstens ein Führungselement (111, 113, 131, 133, 211, 231) aufweist.

12. Verbindungsanordnung (1) nach einem der vorhergehenden Ansprüche, **dadurch gekennzeichnet, dass** die Basisfläche (21) und/oder die Deckfläche (23) des zweiten Verbindungselements (20) wenigstens eine, um etwa eine halbe Wanddicke versetzt angeordnete Fläche (210, 230) aufweist.

## Claims

1. Connection assembly (1) for cable conduit systems (3, 4), which are arranged in a corner region, including at least a first connection element (10) as well as at least a second connection element (20), wherein the connection elements (10, 20) comprise at least one latching element (2) which can be operatively connected with the cable conduit element (31, 41), wherein the connection elements (10, 20) are arranged in a manner to be rotatable relative to one another and wherein the first connection element (10), which comprises a base surface (11), a cover surface (13) arranged at a distance via a side surface (12) as well as via an end face (14) as well as latching elements (2) arranged on the side surface (12), encloses the second connection element (20), which comprises a base surface (21) as well as a cover surface (23) connected thereto via a side surface (22), in an at least partially overlapping manner, wherein the first connection element (10) comprises at least one rotary element (5) arranged on its base surface (11) and/or its cover surface (12), and the second connecting element (20) comprises at least one first opening (6) formed through its base surface (21) and/or its cover surface (22), which opening is formed as an elongated hole having a width approximately corresponding to the outer diameter of the rotary element (5), wherein the second connecting element (20) can be operatively connected with the first connecting element (10) in such a way, that the rotary element (5) of the first connecting element (10) can be arranged on the first opening (6) of the second connecting element (20) and can be inserted into the first opening (6) of the second connecting element (20) by means of a displacing movement of the connecting elements (10, 20) with respect to one another, wherein the rotary element (5) of the first connecting element (10) is movably arranged in the first opening (6) of the second connecting element (20), **characterized in that** the at least a first opening (6) is arranged at a distance to the end face of the base surface (21) and/or the cover surface (23) and to the side surface (22), and **in that** the second connecting element (20) further comprises at least a second opening (7) arranged in parallel to the first opening (6) on the base surface (21) and/or the cover surface (23), wherein the opening is spaced from the first opening (6) via a web (8), which is configured in such a way as to deform elastically all the way to the second opening (7) during the mounting that the rotary element (5) of the first connecting element (10) is mounted at the end of the first opening (6) of the second connecting element (20) in a manner to be rotatably latching.

2. Connection assembly (1) according to claim 1, **characterized in that** the rotary element (5) of the first connecting element (10) is arranged in one piece on the base surface (11) and/or the cover surface (13).

3. Connection assembly (1) according to one of the preceding claims, **characterized in that** the first opening (6) is arranged on the base surface (21) and/or the cover surface (23) of the second connecting element (20) approximately in parallel to the second opening (7).

4. Connection assembly (1) according to one of the preceding claims, **characterized in that** the second connecting element (20) comprises at least one stop element (213, 223, 233).

5. Connection assembly (1) according to one of the preceding claims, **characterized in that** the stop element (213, 233) of the second connecting element (20) rests at least partially against a surface (11, 13) of the first connecting element (10) in a first angular position of the first connecting element (10) to the second connecting element (20), which is smaller than 90°.

6. Connection assembly (1) according to one of the preceding claims, **characterized in that** the stop element (223) of the second connecting element (20) at least partially rests against the end face (14) of the first connecting element (10) in a second angular position of the first connecting element (10) to the second connecting element (20), which is larger than 90°.

7. Connection assembly (1) according to one of the preceding claims, **characterized in that** the pivot, including the rotary element (5) of the first connecting element (10) arranged in the opening (6) of the second connecting element (20), is arranged in the base surface (21) and/or the cover surface (23) of the second connecting element (20).

8. Connection assembly (1) according to one of the preceding claims, **characterized in that** the pivot of the connecting elements (10, 20), including the rotary element (5) of the first connecting element (10) arranged in the opening (6) of the second connecting element (10), is arranged at a distance to the sidewall (22) of the second connecting element (20) and/or at a distance of the end surface (14) of the first connecting element (10).

9. Connection assembly (1) according to one of the preceding claims, **characterized in that** the rotary element (5) of the first connecting element (10) comprises at least one base element (51) as well as at least one fixing element (52).

10. Connection assembly (1) according to one of the preceding claims, **characterized in that** the rotary element (5) of the first connecting element (10) has a height corresponding at least to the wall thickness of the base surface (21) and/or of the cover surface (23) of the second connecting element (20).

11. Connection assembly (1) according to one of the preceding claims, **characterized in that** the base surface (21) and/or the cover surface (23) of the connecting element (10, 20) comprises at least one guiding element (111, 113, 131, 133, 211, 231).

12. Connection assembly (1) according to one of the preceding claims, **characterized in that** the base surface (21) and/or the cover surface (23) of the second connecting element (20) comprises at east one surface (210, 230) which is arranged in a manner offset by approximately half the wall thickness.

## Revendications

1. Agencement de liaison (1) pour des systèmes de conduit de câbles (3, 4) qui sont disposés dans une zone en angle, comprenant au moins un premier élément de liaison (10) ainsi qu'au moins un deuxième élément de liaison (20), les éléments de liaison (10, 20) présentant au moins un élément d'encliquetage (2) pouvant être mis en liaison active avec l'élément de conduit de câbles (31, 41), les éléments de liaison (10, 20) étant disposés de manière à pouvoir être tournés l'un par rapport à l'autre, et le premier élément de liaison (10), lequel présente une surface de base (11), une surface de recouvrement (13), disposée à distance de la surface de base par l'intermédiaire d'une surface latérale (12) ainsi que d'une surface frontale (14), ainsi que des éléments d'encliquetage (2) disposés la surface latérale (12), entourant le deuxième élément de liaison (20) en le recouvrant au moins en partie, lequel présente une surface de base (21) ainsi qu'une surface de recouvrement (23) reliée à celle-ci par l'intermédiaire d'une surface latérale (22), le premier élément de liaison (10) présentant au moins un élément de rotation (5) disposé sur sa surface de base (11) et/ou sur sa surface de recouvrement (12), et le deuxième élément de liaison (20) présentant au moins une première ouverture (6) traversant sa surface de base (21) et/ou sa surface de recouvrement (22), laquelle ouverture est réalisée comme trou oblong ayant une largeur correspondant approximativement au diamètre extérieur de l'élément de rotation (5), le deuxième élément de liaison (20) pouvant être mis en liaison active avec le premier élément de liaison (10) de manière à ce que l'élément de rotation (5) du premier élément de liaison (10) puisse être disposé sur la première ouverture (6) du deuxième élément de liaison (20) et que, par un mouvement coulissant des éléments de liaison (10, 20) l'un par rapport à l'autre, il puisse être poussé dans la première ouverture (6) du deuxième élément de liaison (20), l'élément de rotation (5) du premier élément de liaison (10) étant disposé de manière déplaçable dans la première ouverture (6) du deuxième élément de liaison (20), **caractérisé en ce que** l'au moins une première ouverture (6) est disposée à distance du côté frontal de la surface de base (21) et/ou de la surface de recouvrement (23) et à distance de la surface latérale (22), et **en ce que** le deuxième élément de liaison (20) présente en outre au moins une deuxième ouverture (7) disposée sur la surface de base (21) et/ou sur la surface de recouvrement (23), parallèlement à la première ouverture (6), laquelle deuxième ouverture est distancée de la première ouverture (6) par l'intermédiaire d'une nervure (8) qui est réalisée de manière à ce que lors du montage, elle se déforme élastiquement vers la deuxième ouverture (7) de sorte que l'élément de rotation (5) du premier élément de liaison (10) est logé en s'encliquetant par rotation à l'extrémité de la première ouverture (6) du deuxième élément de liaison (20).

2. Agencement de liaison (1) selon la revendication 1, **caractérisé en ce que** l'élément de rotation (5) du premier élément de liaison (10) est disposé d'une seule pièce sur la surface de base (11) et/ou sur la surface de recouvrement (13).

3. Agencement de liaison (1) selon l'une quelconque des revendications précédentes, **caractérisé en ce que** la première ouverture (6) est disposée sur la surface de base (12) et/ou sur la surface de recouvrement (23) du deuxième élément de liaison (20) à peu près parallèlement à la deuxième ouverture (7).

4. Agencement de liaison (1) selon l'une quelconque des revendications précédentes, **caractérisé en ce que** le deuxième élément de liaison (20) présente au moins un élément de butée (213, 223, 233).

5. Agencement de liaison (1) selon l'une quelconque des revendications précédentes, **caractérisé en ce que** dans une première position angulaire du premier élément de liaison (10) par rapport au deuxième élément de liaison (20), laquelle est inférieure à 90°, l'élément de butée (213, 233) du deuxième élément de liaison (20) est au moins en partie adjacent à une surface (11, 13) du premier élément de liaison (10).

6. Agencement de liaison (1) selon l'une quelconque des revendications précédentes, **caractérisé en ce que** dans une seconde position angulaire du premier élément de liaison (10) par rapport au deuxième élément de liaison (20), laquelle est supérieure à 90°, l'élément de butée (223) du deuxième élément de liaison (20) est au moins en partie adjacent à la surface frontale (14) du premier élément de liaison (10).

7. Agencement de liaison (1) selon l'une quelconque des revendications précédentes, **caractérisé en ce que** le point de rotation, comprenant l'élément de rotation (5) du premier élément de liaison (10), disposé dans l'ouverture (6) du deuxième élément de liaison (20), est disposé dans la surface de base (21) et/ou dans la surface de recouvrement (23) du deuxième élément de liaison (20).

8. Agencement de liaison (1) selon l'une quelconque des revendications précédentes, **caractérisé en ce que** le point de rotation des éléments de liaison (10, 20), comprenant l'élément de rotation (5) du premier élément de liaison (10), disposé dans l'ouverture (6) du deuxième élément de liaison (20), est disposé à distance de la paroi latérale (22) du deuxième élément de liaison (20) et/ou à distance de la surface frontale (14) du premier élément de liaison (10).

9. Agencement de liaison (1) selon l'une quelconque des revendications précédentes, **caractérisé en ce que** l'élément de rotation (5) du premier élément de liaison (10) présente au moins un élément de base (51) ainsi qu'au moins un élément de fixation (52).

10. Agencement de liaison (1) selon l'une quelconque des revendications précédentes, **caractérisé en ce que** l'élément de rotation (5) du premier élément de liaison (10) présente une hauteur qui correspond au moins à l'épaisseur de paroi de la surface de base (21) et/ou de la surface de recouvrement du deuxième élément de liaison (20).

11. Agencement de liaison (1) selon l'une quelconque des revendications précédentes, **caractérisé en ce que** la surface de base (21) et/ou la surface de recouvrement (23) de l'élément de liaison (10, 20) présentent au moins un élément de guidage (111, 113, 133, 211, 231).

12. Agencement de liaison (1) selon l'une quelconque des revendications précédentes, **caractérisé en ce que** la surface de base (21) et/ou la surface de recouvrement (23) du deuxième élément de liaison (20) présentent au moins une surface (210, 230) disposée en étant décalée d'environ une demi-épaisseur de paroi.
